# EUROPÄISCHE PATENTANMELDUNG

(11) **EP 0 646 519 A2**
(43) Veröffentlichungstag der Anmeldung: **05.04.1995**
(21) Anmeldenummer: 94250219.6
(22) Anmeldetag: 05.09.1994
(51) Int. Cl.: B62J 6/08

(54) **Elektrische Beleuchtungseinrichtung**

(30) Priorität: 04.09.1993 DE 4330515
(71) Anmelder: Mendoza, Adrian, D-12159 Berlin (DE)
(72) Erfinder: Mendoza, Adrian, D-12159 Berlin (DE)
(74) Vertreter: Christiansen, Henning, Dipl.-Ing.

(57) **Zusammenfassung**

Elektrische Beleuchtungseinrichtung für ein Fahrrad, bei der eine Frontleuchte und der Dynamo an einer gemeinsamen Halterung montiert sind, wobei die Lampe und der Dynamo in Bezug auf die Halterung getrennt höhenverstellund/oder um eine horizontale Achse verschwenk- und arretierbar ausgebildet ist, die Halterung besteht aus: einer ersten, mindestens erste rastbare Kupplungsmittel (12.1, 12.1', 12.2 und 12.2') aufweisenden, gemeinsam die Frontleuchte (3, 3') und den Dynamo (2, 2') tragenden (Teil-)Haltevorrichtung (1, 1') und einer zweiten, an der Vordergabel (5) des Fahrrades vorgesehenen und ein Gegenstück für die ersten rastbaren Kupplungsmittel bildenden zweite rastbare Kupplungsmittel (12.3, 12.3', 12.4 und 12.4') aufweisenden (Teil-)Haltevorrichtung (4, 4', 4'') besteht. Ferner sind die ersten und zweiten rastbaren Kupplungsmittel (12.1, 12.2, 12.3, 12.4 bzw. 12.1', 12.2', 12.3', 12.4') mittels eines Betätigungselements von einander lösbar, welches zu seiner Auslösung eine Druckbetätigung oder eine Dreh- oder Schwenkbewegung von weniger als einer Umdrehung erfordert und behalten bei Montage bzw. Demontage der Frontleuchte (3, 3') und des Dynamos (2, 2') ihre arretierte Voreinstellung in Bezug auf die erste (Teil-)Haltevorrichtung bei.

## Beschreibung

Die Erfindung betrifft eine elektrische Beleuchtungseinrichtung für ein Fahrrad der im Oberbegriff des Anspruchs 1 angegebenen Art.

Für zum öffentlichen Straßenverkehr zugelassene Fahrräder ist eine Beleuchtungseinrichtung vorgeschrieben, welche eine Frontleuchte und ein Rücklicht aufweist. Die zum Betreiben der Beleuchtungseinrichtung erforderliche elektrische Energie wird während der Fahrt durch einen Dynamo erzeugt.

Für Sport- und/oder Geländefahrräder ist es bei Benutzung für Sportzwecke wünschenswert, die dann nicht benötigte Beleuchtungseinrichtung zu entfernen. Dadurch wird das Gewicht des Fahrrades einerseits vermindert und andererseits die Gefahr ausgeschlossen, daß die Beleuchtungseinrichtung beschädigt oder beim Abstellen des Fahrrads entwendet wird.

Gleichzeitig ist es jedoch auch wünschenswert, die Tauglichkeit des Fahrrads für öffentliche Straßen nach Abschluß einer sportlichen Benutzung schnell und ohne besonderen Aufwand wiederherzustellen.

In diesem Zusammenhang ist aus dem deutschen Gebrauchsmuster Nr. G 90 05 507.1 eine rückwärtige Beleuchtungseinrichtung für ein Fahrrad bekannt, bei der die Rückleuchte und der Dynamo, zu einer Baugruppe zusammengefaßt, mit dem Fahrrad an entsprechender Stelle verbindbar sind. Diese weisen den Nachteil auf, daß sie nicht ohne Werkzeug demontierbar sind. Außerdem besteht keine Möglichkeit einer Justage.

Ferner sind aus dem US-Patent Nr. 1 146 939 sowie den deutschen Patentschriften Nr. 742 136 und Nr. 819 361 kombinierte Anordnungen einer Frontleuchte mit einem Dynamo bekannt, welche aber sämtlichst mit dem Fahrrad fest verschraubt und auch höchstens gemeinsam beim ursprünglichen Befestigungsvorgang gemeinsam ausrichtbar sind.

Ausgehend von den Mängeln des Standes der Technik liegt der Erfindung die Aufgabe zugrunde, eine Beleuchtungseinrichtung der eingangs genannten Gattung zu schaffen, die ohne besondere Mühe montierbar oder demontierbar ist, wobei sich eine eine einmal vorgenommene Justage erhalten bleiben soll.

Diese Aufgabe wird mit den kennzeichnenden Merkmalen des Anspruchs 1 gelöst.

Die Erfindung schließt die Erkenntnis ein, daß eine besonders einfaches Anbringen oder Entfernen einer Beleuchtungseinrichtung durch eine Montage bzw. Demontage "in einem Griff" bei einer in eine erste und eine zweite Haltevorrichtung geteilte Halterung für die Beleuchtungseinrichtung gewährleistet ist, wobei die Frontleuchte des Fahrrades und der zum Betrieb erforderliche Dynamo an einer gemeinsamen ersten (Teil-)Haltevorrichtung mit Winkelverstellmittel für die Leuchte und Höhenverstellmittel für den Dynamo vorjustiert angeordnet sind und die erste Haltevorrichtung positionsgenau in der zweiten, an der Vordergabel des Fahrrades bzw. am vorderen Abschnitt des Fahrradrahmens vorgesehen zweiten (Teil-) Haltevorrichtung arretiert wird. Die damit verbundene kraft- und/oder formschlüssige Verbindung gewährleistet auf vorteilhafte Weise, daß sich ein nachträglichen Justieren von Leuchte und Dynamo erübrigt.

Dies ist besonders nach Benutzung des Fahrrades für eine Geländefahrt bei feuchtem oder regnerischem Wetter günstig und verhindert, daß das Anbringen der geforderten Beleuchtungseinrichtungen unterbleibt und damit die Gefahr eines Verkehrsunfalles beträchtlich steigt. Es kommt weiterhin vorteilhaft hinzu, daß eine Beschädigung der Lackierung des Fahrrades oder verchromter Fahrradteile die bei häufigem An- und Abbau nicht zu vermeiden ist, verhindert wird, zumal jedes Mal die Massevebindung der Beleuchtungseinrichtung, vorzugsweise durch die Spitze von Madenschrauben, erneut hergestellt werden muß.

Entsprechend einer bevorzugten Ausführungsform der Erfindung sind an der ersten und an der zweiten Haltevorrichtung jeweils aufeinander abgestimmte rastbare Kupplungsmittel vorgesehen, die bei der Montage in Wirkungseingriff gebracht werden und eien positionsgenaue Arettierung der ersten Haltevorrichtung gewährleisten. Dabei wird gleichzeitig die elektrische Kontaktierung des Fahrradrücklichtes vorgenommen. Die erste Haltevorrichtung trägt die Fahrradleuchte und den für den Betrieb der Leuchte erforderlichen Dynamo. Die zweite Haltevorrichtung ist an der Fahrradgabel oder an einem ihrer Holme befestigt und weist zu diesem Zweck zwei Befestigungslaschen auf, wobei eine der Laschen an dem einen Teil des Bremssystems des Fahrrads tragenden Cantilever-Sockel befestigt ist und die andere sich, durch eine Schelle fixiert, an einem Holm der Vordergabel abstützt. Über den Cantilever-Sockel ist die erforderliche Masseverbindung des Beleuchtungssystems hergestellt.

Nach einer günstigen Weiterbildung der Erfindung ist die zweite Haltevorrichtung der zweigeteilten Halterung durch eine Spannschelle form- und kraftschlüssig an einem Holm der Vorderradgabel befestigt. Die Lösung ist für Fahrräder geeignet, welche noch mit einem konventionellen Bremssystem ausgerüstet sind. Die für den Betrieb der Beleuchtungseinrichtung erforderliche Masseverbindung wird durch eine kurze Kabelbrücke zwischen der zweiten Haltevorrichtung und der nächstgelegenen "Masse"- tragenden Schraubverbindung, beispielsweise an einem der Bremshebel, hergestellt. Dadurch sind in vorteilhafter Weise Lackschäden an der Vorderradgabel und längere Kabelwege vermeidbar.

Entsprechend einer anderen vorteilhaften Ausführungsform der Erfindung sind die erste und die zweite Haltevorrichtung jeweils als Element einer Steckverbindung ausgebildet. Diese Form der Haltevorrichtungen bietet gute Voraussetzungen für eine Verdrehsicherheit bei gleichzeitig großer Positioniergenauigkeit. Sie bietet darüberhinaus die Möglichkeit, die rastbaren Kupplungsmittel in günstiger Weise, beispielsweise durch Verklemmen, zusätzlich zu arretieren.

An den beiden Haltevorrichtungen sind in vorteilhafter Weise Kontaktmittel vorgesehen, welche bei Zusammenfügen der Haltevorrichtungen zu einer Halterung für Fahrradleuchte und Dynamo einen Steckkontakt für ein Anschlußkabel des zur Beleuchtungsanlage des Fahrrades gehörenden Rücklichts mit dem entsprechenden Anschluß des Steckkontakt kann in günstiger Weise auch für den Anschluß eines Batterie-Packs benutzt werden, wenn eine Standbeleuchtung des Fahrrades erforderlich ist oder der Dynamo ausgefallen ist. Wird an Stelle des Batterie-Packs eine im Leuchtengehäuse installierbare Standlicht-Elektronik vorgesehen, so sind im Hinblick auf die Erhöhung der Kompaktheit der Beleuchtungseinrichtung weitere Vorteile erreichbar.

Entsprechend einer anderen vorteilhaften Weiterbildung der Erfindung sind an dem Rücklicht des Fahrrades mechanische Anschlußelemente vorgesehen, welche rastbare Kupplungsmittel aufweisen und dadurch ein bequemes Lösen des Rücklichtes vom Rahmen, vom Schutzblech oder anderen Fahrradteilen gewährleisten. Die rastbaren Kupplungsmittel der Anschlußelemente am Rücklicht entsprechen im wesentlichen den rastbaren Kupplungsmitteln der ersten Haltevorrichtung, sind in ihrer Position jedoch komplementär angeordnet. Dadurch können bei einem Sportfahrrad das Front- und das Heckbauteil zwecks einer sicheren Aufbewahrung auf einfache Art und Weise miteinander verbunden werden, wenn das Fahrrad für den Sportbetrieb kurzfristig umgerüstet werden muß.

Bei einer anderen vorteilhaften Ausführungsform ist der Dynamo als Walzendynamo ausgebildet und wird über die Lauffläche der Fahrradbereifung angetrieben. Auf diese Weise entsteht eine besonders kompakte Ausführung der erfindungsgemäßen Vorrichtung.

In günstiger Weise wird die erste Haltevorrichtung aus einem flexiblen Kunststoff, vorzugsweise Delrin, und die zweite Haltevorrichtung als Blechformteil ausgebildet, wobei die beiden Teile dann jeweils im gegenseitigen Formeingriff zusammengefügt werden.

Bei einer - auch selbständig verwendbaren - Ausführungsform der Erfindung weist die Verbindungsvorrichtung für ein Fahrradzubehörteil eine dem Diebstahlschutz dienende Feststelleinrichtung oder Schlüsselvorrichtung auf, ohne deren Vorhandensein bzw. Betätigung ein Entfernen der ersten Haltevorrichtung von der zweiten Haltevorrichtung nicht erfolgen kann. Eine derartige Feststelleinrichtung weist insbesondere eine durch einen Schrauber mit einem Sonderprofil bewegbare Schraube auf bzw. bildet als Schlüsselvorrichtung das Betätigungselement.

Bei einer anderen günstigen Weiterbildung erfüllen die rastbaren Kupplungsmittel durch eigene Elastizität oder durch Wirkung eines Federelements ihre Haltefunktion infolge Rast- oder Schnappwirkung, welche insbesondere durch die Schlüsselvorrichtung aufhebar ist.

Die rastbaren Kupplungsmittel bestehen insbesondere aus einer an einem beweglichen Hebelelement angeordneten Rastnase, die mit einer der Haltevorrichtungen verbunden ist und bei unbetätigtem Schlüsselelement durch Eingriff in die andere Haltevorrichtung deren relative Verschiebebewegung sperrt. Dabei ist das erste bewegliche Hebelelement bevorzugt durch ein zweites bewegliches Hebelelement in seiner Bewegung blockiert, wobei das Schlüsselelement bei seiner Betätigung das zweite Hebelelement zur Freigabe des ersten Hebelelements aktiviert.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: der erste Teil der Halterung eines bevorzugten Ausführungsbeispiels der Erfindung,
- Figur 2: eine bevorzugte Ausführungsform des zweiten Teils der Halterung,
- Figur 3: eine Darstellung der Ausführungsform gemäß Figuren 1 und 2 während der Montage,
- Figur 4: eine Darstellung der bevorzugten Ausführungsform der Erfindung nach erfolgter Montage gemäß Figur 3,
- Figur 5: eine Darstellung eines Details der erfindungsgemäß zweiteiligen Halterung in Seitenansicht,
- Figur 6: die Darstellung des Details gemäß Figur 5 geschnitten längs der Linie A...A,
- Figur 7: eine günstige Weiterbildung der in Figur 2 dargestellten Erfindung,
- Figur 8: eine andere vorteilhafte Ausführungsform der Erfindung,
- Figur 9: eine Darstellung der Ausführung gemäß Figur 8 in montiertem Zustand,
- Figuren 10a bis c: ein Detail der Ausführungsform entsprechendden Figuren 8 und 9 in verschiedenen Ansichten,
- Figuren 11a bis d: ein weiteres Detail der in den Figuren 8 und 9 gezeigten Haltevorrichtung,
- Figuren 12a bis c: eine Darstellung eines weiteren Details der in den Figuren 8 und 9 gezeigten Ausführungsform der Erfindung in drei verschiedenen Stadien des Zusammenfügens,
- Figur 13: eine Variante des in Figur 9 gezeigten Ausführungsbeispiels,
- Figuren 14a und b: eine eine weitere Variante der Erfindung in montiertem und demontiertem Zustand,
- Figur 15: ein Detail der in den Figuren 14a und b dargestellten Variante sowie
- Figuren 16a bis c: weitere Details der Ausführung gemäß Figuren 14a und b in verschiedenen Positionen.

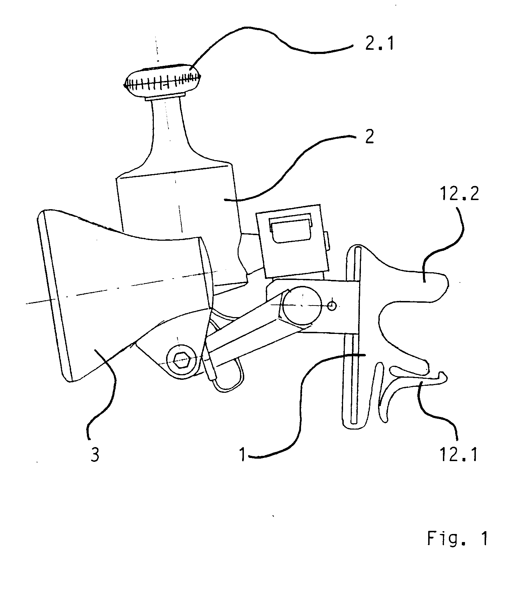

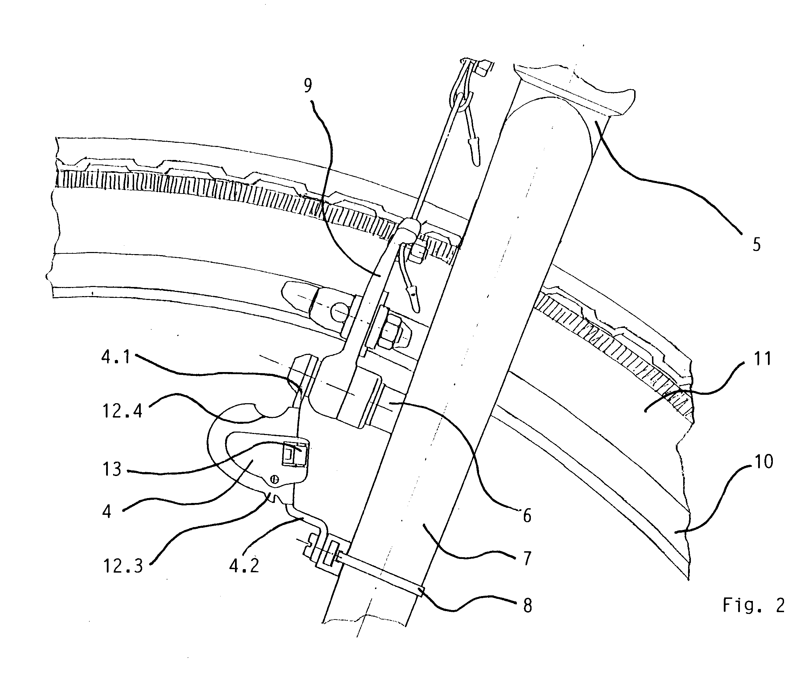

In den Figuren 1, 2, 3 und 4 sind die zu einer Halterung für eine Fahrradbeleuchtungseinrichtung verbindbaren Haltevorrichtungen 1 und 4 in Seitenansicht in demontiertem Zustand, nach erfolgter Montage an ein Fahrrad bzw. in Montagestellung schematisiert dargestellt. Figur 1 zeigt eine Haltevorrichtung 1 als Teil der Halterung zum Befestigen einer Beleuchtungseinrichtung an einem Fahrrad. Die Fahrradfrontleuchte 3 und der Dynamo 2 sind winkeleinstellbar bzw. höheneinstellbar und eine Baueinheit bildend an der Haltevorrichtung 1 fest eingestellt montiert. Der Dynamo 2 trägt ein Antriebsrad 2.1, welches durch Andruck an die Flanke des Vorderradreifens des Fahrrades während der Fahrt bewegt wird und dadurch den Anker des Dynamos 2 zwecks Erzeugung der Betriebsspannung für die Beleuchtungseinrichtung bewegt. Die Haltevorrichtung 1 weist an ihrem freien Ende zwei rastbare Kupplungsmittel 12.1 und 12.2 auf, mit denen sie mit einer zweiten Haltevorrichtung (vergleiche u. a. Position 4 in Figur 2) zu einer Halterung verbunden werden kann.

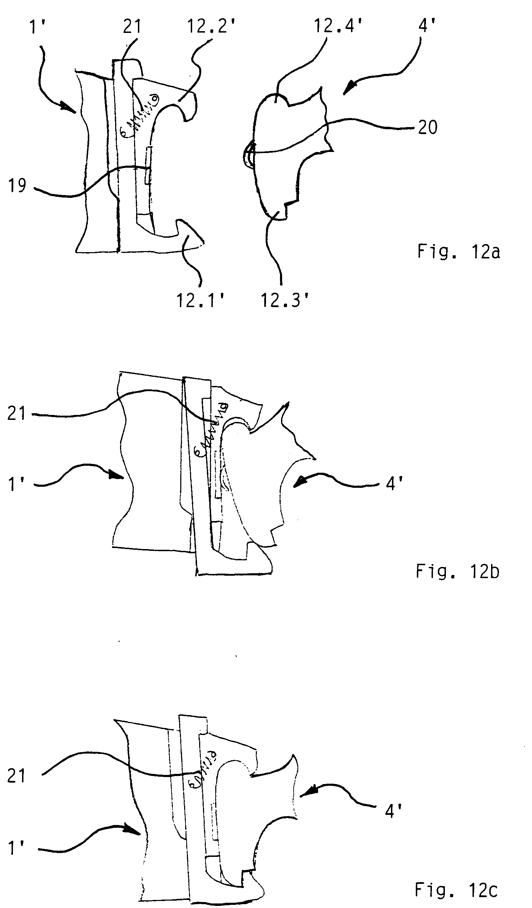

Die zweite Haltevorrichtung 4 trägt zwei Befestigungslaschen 4.1 und 4.2, mit welchen sie am Holm 7 der Vordergabel 5 des Fahrrades positioniert ist. Zur Befestigung wird einerseits der am Holm 7 befindliche Sockel 6 der vorderen Cantilever-Handbremse 9 (Haltelasche 4.1) und andererseits der Holm (Haltelasche 4.2) benutzt, auf welchem sich die Haltelasche 4.2 - durch eine Schelle 8 gesichert - abstützt. Der Cantilever-Sockel 6 dient als Drehpunkt der Bremse 9, deren Bremsbacken gegen die unterhalb der Bereifung 11 befindlichen Felge 10 gepreßt werden. An der dem Holm 7 der Vordergabel 5 abgewandten Seite der Haltevorrichtung sind zwei rastbare Kupplungsmittel 12.3 und 12.4 vorgesehen, über welche die Verbindung mit der Haltevorrichtung 1 herstellbar ist. An der dem Holm 7 zugewandten Seite der Haltevorrichtung 4 ist ein elektrischer Steckkontakt 13 vorgesehen, über welchen die Spannungsversorgung für das Fahrradrücklicht vorgenommen wird. Beim Zusammenfügen der beiden Haltevorrichtungen 1 und 4 erfolgt in vorteilhafter Weise eine elektrische Verbindung des Steckkontaktes 13 mit dem entsprechenden (nicht dargestellten) Kontakt des Dynamos 2. Dazu weisen die Haltevorrichtungen 1 und 4 die erforderlichen Kontaktmittel (vergleiche die Positionen 19 und 20 in Figur 12 a) auf.

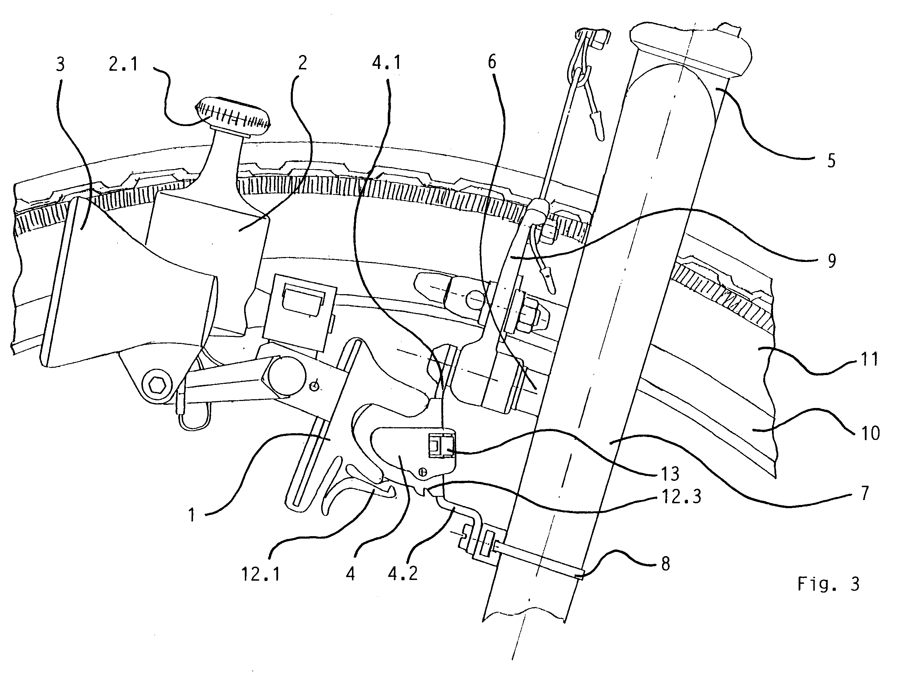

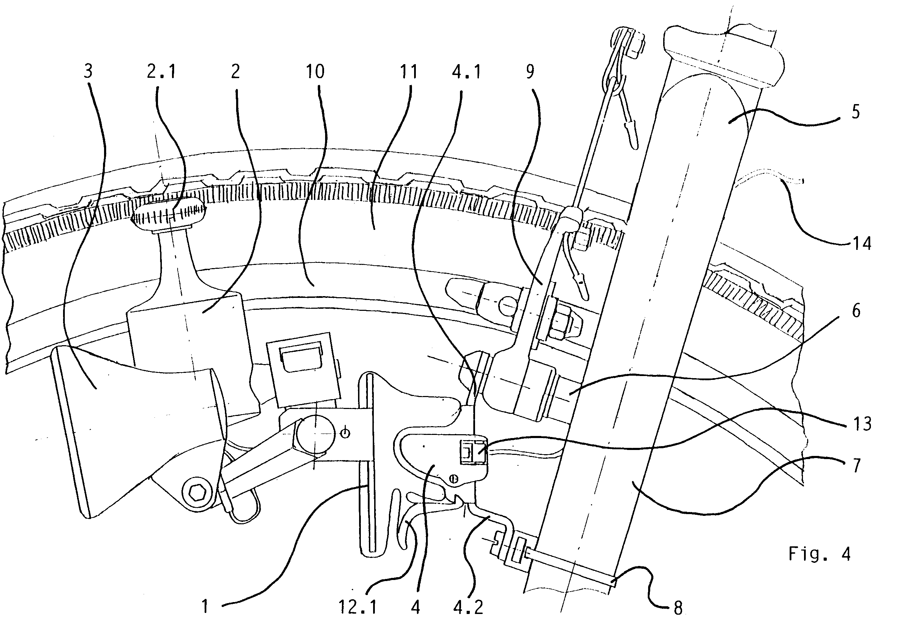

Bei der Montage der in Fahrtrichtung vorn angeordneten Teile 2 und 3 der Fahrradbeleuchtung wird die dazugehörige Haltevorrichtung 1 schräg von oben auf die durch ihre feste Verankerung ihrer Laschen 4.1 und 4.2 am Cantilever-Sockel 6 bzw. am Holm 7 als Auflager dienende Haltevorrichtung 4 geschoben, bis die rastbaren Kupplungsmittel 12.1 und 12.3 bzw. 12.2 und 12.4 der beiden Haltevorrichtungen 1 und 4 in Wirkungeingriff gelangen (Figur 3). Entsprechend der festen Zuordnung der einzelnen rastbaren Kupplungsmittel, der festen Position der Haltevorrichtung 4 am Holm 7 der Vordergabel 5 sowie der festen Einstellung der Position der Frontleuchte 3 bzw. des Dynamos 2 an der Haltevorrichtung 1 ist in vorteilhafter Weise eine Montage "mit einem Griff" gewährleistet (Figur 4). Die Schnelligkeit der Montage ist gleichzeitig mit dem Vorteil verbunden, daß sich eine erneute Justage der Frontleuchte 3 und/oder des Dynamos 2 erübrigt. Die Demontage der wesentlichen Teile 2 und 3 der Beleuchtungseinrichtung erfolgt in gleicher Weise problemlos durch Bewegen des als Kipphebel ausgebildeten rastbaren Kupplungsmittels 12.1, wodurch das rastbare Kupplungsmittel 12.3 freigegeben wird und die Haltevorrichtung 1 zusammen mit der Frontleuchte 3 und dem Dynamo 2 ohne Störung durch ein gegebenenfalls vorhandenes Schutzblech nach oben abgenommen werden kann. Über das Kabel 14 ist ein (nicht dargestelltes) Fahrradrücklicht angeschlossen.

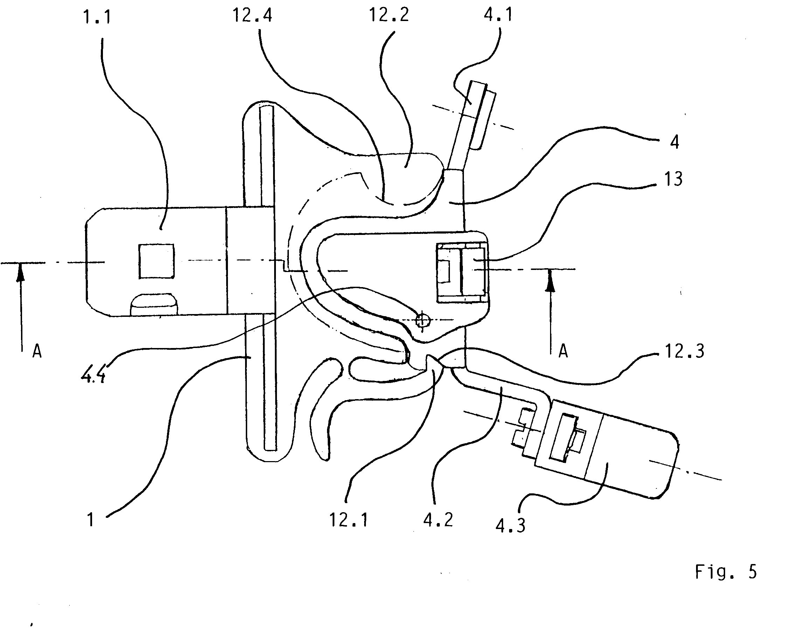

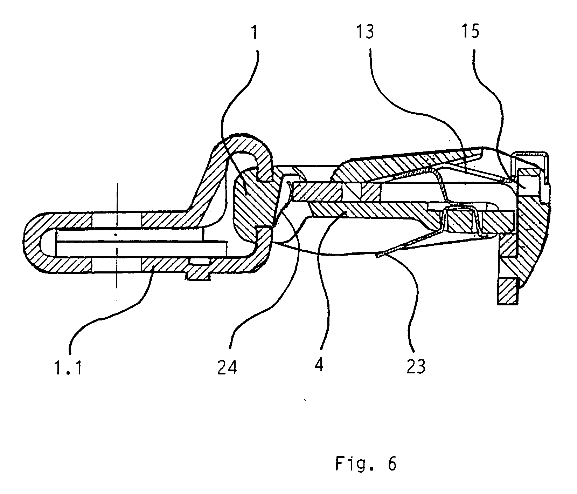

In den Figuren 5 und 6 sind die zu einer Halterung verbundenen Haltevorrichtungen 1 und 4 in Seitenansicht bzw. als Darstellung des Schnittes A...A in schematisierter Form gezeigt. Die formschlüssige Verbindung der beiden Haltevorrichtungen 1 und 4 unter Nutzung der rastbaren Kupplungsmittel 12.1 bis 12.4 gewährleistet auch bei häufiger Montage bzw. Demontage eine - ohne jeweils erneut notwendige Justage - eindeutige Positionierung der Frontleuchte und des Dynamos in Bezug auf die erforderliche Ausleuchtung eines bestimmten Abschnitts der Straße vor dem Fahrrad bzw. auf die Lage der Dynamo-Antriebsrolle an der Seitenfläche der vorderen Fahrrad-Bereifung. Über die obere Befestigungslasche 4.1 der dauerhaft am Fahrrad montierten Befestigungsvorrichtung 4 wird die elektrische Masseverbindung des Dynamos zum Fahrradrahmen hergestellt. Die untere Befestigungslasche 4.2 trägt an ihrem freien Ende einen angeschraubten Stützwinkel 4.3, welcher durch eine Schelle (vergleiche Position 8 in den Figuren 2, 3, 4) an dem Gabelholm fixiert wird. Diese Art der Befestigung schont auf vorteilhafte Weise die Lackierung der Fahrradgabel und ist darüberhinaus auch deshalb günstig, weil die Haltevorrichtung 4 - unabhängig von Form und Durchmesser der Gabelholme - an fast alle gängigen Typen von Fahrradgabeln, sogar Federgabeln, montiert werden kann. An der Befestigungsvorrichtung 1 ist eine Blechklammer 1.1 vorgesehen, an welche die Frontleuchte und der Dynamo montiert werden. Die Blechklammer ist in vorteilhafter Weise derart ausgebildet, daß alle handelsüblichen Seiten- und Felgendynamos montiert werden können und die vorgesehenen Kippsicherungen nicht außer Betrieb gesetzt werden müssen. Eine Feststelleinrichtung 4.4 dient prophylaktisch der Diebstahlsicherung und ist durch einen Imbus-Schlüssel zu betätigen (Figur 5).

In der Darstellung des Schnittes längs der Linie A...A in Figur 5 ist die Anordnung der elektrischen Kontaktmittel 13, 23 und 24 gezeigt. Der Massekontakt 24 ist mit der Blechklammer 1.1 verbunden. Der Phasenkontakt 23 der Haltevorrichtung 1 weist eine federnde Verbindung mit dem Anschlußkontakt 13 für das Fahrradrücklicht auf. Durch eine Öffnung 15 am gabelseitigen Ende der Haltevorrichtung 4 wird das entsprechende Anschlußkabel des Rücklichtes geschoben und auf einfache Art und Weise durch die Federwirkung des Kontakts 13 in seiner Stellung fixiert und kontaktiert. Der Phasenkontakt 23 ist über ein (nicht dargestelltes) Kabel in Form einer Steckverbindung an den Dynamo angeschlossen (Figur 6).

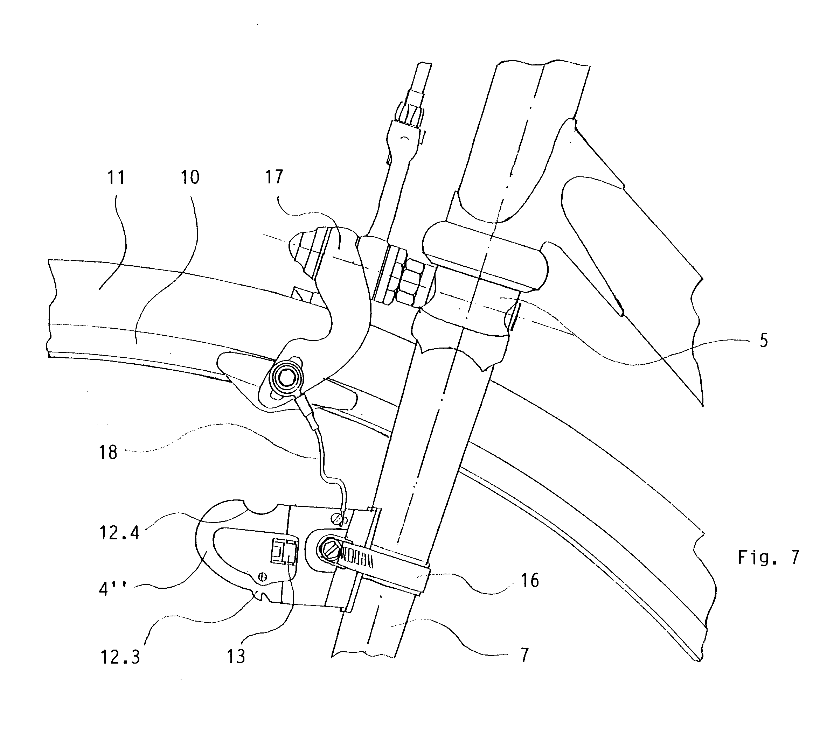

Figur 7 zeigt als als günstige Weiterbildung der Erfindung eine am Holm 7 der Gabel 5 herkömmlicher Fahrräder befestigte Haltevorrichtung 4''. Zur Befestigung ist eine Spannschelle 16 vorgesehen. Die Befestigungslaschen für die Fixierung der Haltevorrichtung bei Fahrrädern mit einem Cantilever-Bremssystem (vergleiche die Positionen 4.1 und 4.2 in den Figuren 2, 3, 4 und 5) entfallen, so daß der notwendige Masseanschluß der Haltevorrichtung 4'' durch ein gesondertes Kabel 18 zu einem Arm der Vorderradbremse 17 hergestellt werden muß.

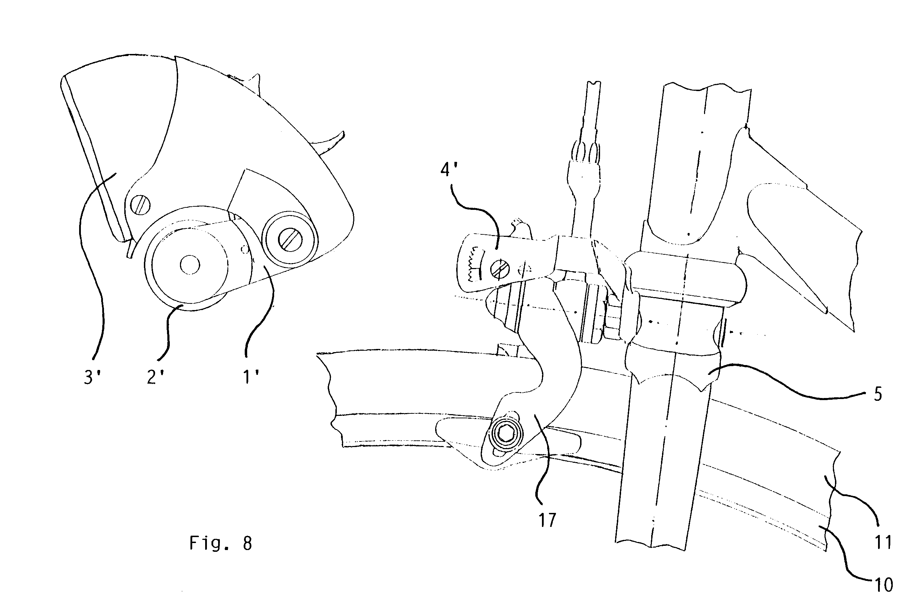

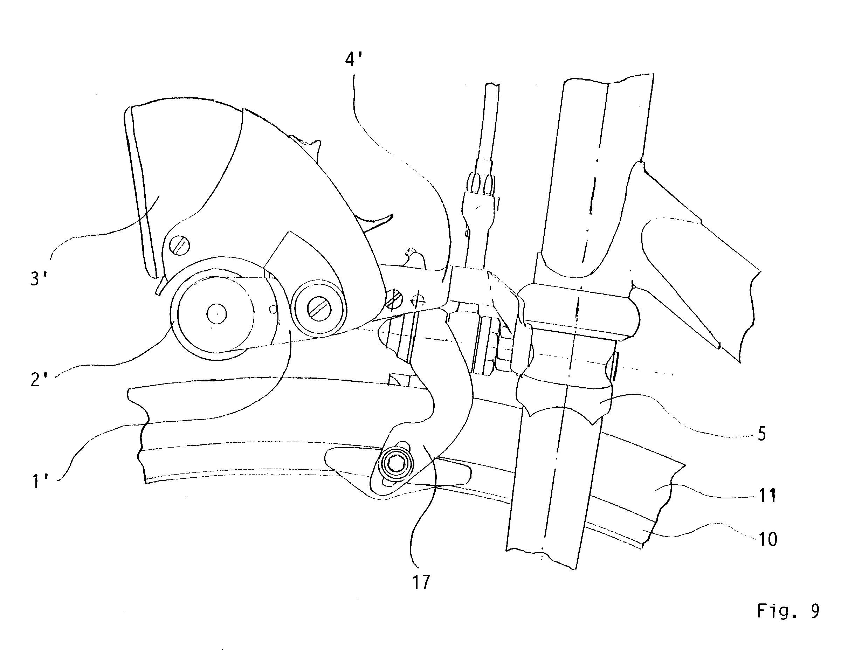

Die Figuren 8 und 9 zeigen eine weitere vorteilhafte Ausführungsform der Erfindung, bei der die Beleuchtungseinrichtung durch einen Walzendynamo 2' mit der erforderlichen Betriebsspannung versorgt wird, bei getrennter Halterung bzw. im montierten Zustand. Eine mit einem Walzendynamo betriebene Beleuchtungseinrichtung weist den Vorteil auf, daß die Funktionssicherheit und der hohe Wirkungsgrad des Dynamos mit einer Anordnung der Frontleuchte an der beleuchtungstechnisch günstigsten Stelle des Fahrrades in günstiger Weise kombiniert ist. Die erste Haltevorrichtung 1' trägt an ihrem vorderen Ende den Walzendynamo 2', welcher von der Frontleuchte 3', die an dem anderen Ende der Haltevorrichtung 1' befestigt ist, überragt wird. Die mit Fahrrad fest verbundene zweite Haltevorrichtung 4' ist unterhalb des Steuerlagers des Vorderrades an der Fahrradgabel 5 befestigt und überragt die Bremse 17 in Fahrtrichtung. Der Befestigungsbolzen der Felgenbremse wird in günstiger Weise auch zum Fixieren der Haltevorrichtung 4' verwendet. Über den Befestigungsbolzen wird gleichzeitig die erforderliche Masseverbindung der Beleuchtungseinrichtung zum Fahrradrahmen hergestellt. Der Antrieb des Walzendynamos 2' erfolgt nach Montage der ersten Haltevorrichtung 1' an der zweiten Haltevorrichtung 4' durch die Lauffläche des Vorderreifens 11.

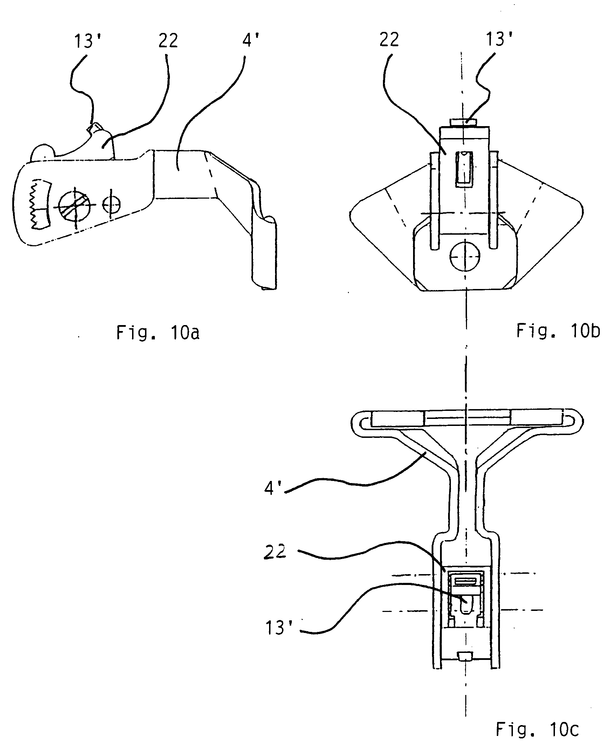

In den Figuren 10a bis 10c ist eine vorteilhafte Ausführungsform der entsprechend den Figuren 8 und 9 vorgesehenen Haltevorrichtung 4' in Seitenansicht bzw. als Draufsicht in schematisierter Form dargestellt. Sie besteht aus Gründen der mechanischen Festigkeit aus Metall und ist an ihrem der ersten Haltevorrichtung 1' zugewandten Ende zweischenklig ausgebildet. Die freien Enden der Schenkel sind durch einen zwischen ihnen angeordneten Kontakträger 22 verbunden, aus welchem der Anschlußkontakt 13' für das Kabel des Fahrradrücklichtes nach oben herausragt.

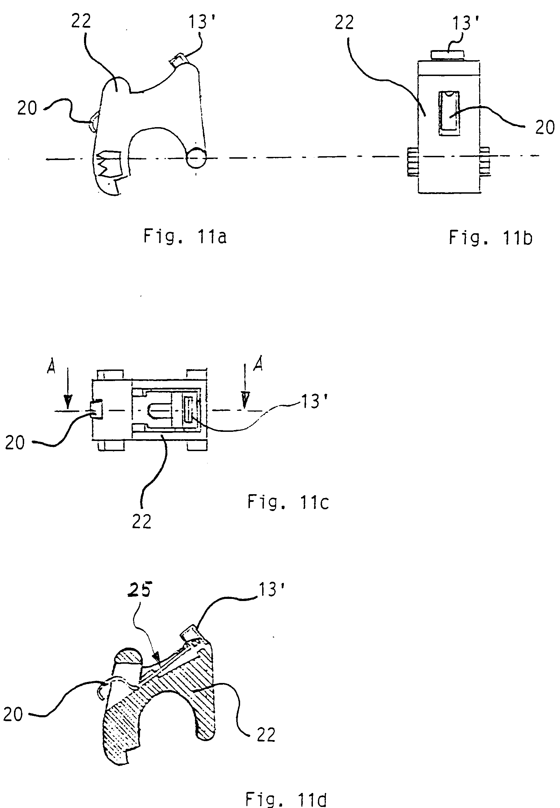

Der in den Figuren 10a bis 10c zwischen Schenkeln der zweiten Haltevorrichtung 4' befindliche Kontakträger 22 ist in den Figuren 11a bis 11d in vereinfachter Form als Seitenansicht, in Ansicht von oben und als Schnitt längs der Linie A...A entsprechend Figur 11c dargestellt. Der Kontaktträger 22 besteht aus einem Kunststoff und weist an seiner, in Gebrauchslage oberen Seite eine Ausnehmung auf, in welcher ein Federkontakt 25 angeordnet ist. Das eine Ende 13' des Federkontaktes 25 dient dem Anschluß des Verbindungskabels zum Fahrradrücklicht, das andere Ende 20 ist konvex geformt und ist bei montierter Beleuchtungseinrichtung mit dem Phasenanschluß des Dynamos verbunden. Der Kontaktträger 22 der zweiten Haltevorrichtung ist an der Seite des Kontaktanschlusses 20 mehrfach wulstartig ausgeformt, um eine sichere Verbindung mit der ersten Haltevorrichtung der Halterung zu ermöglichen.

In den Figuren 12a bis 12.c ist der Montagevorgang, bei dem die erste Haltevorrichtung 1' mit der zweiten Haltevorrichtung 4' zu einer Halterung für den mit einer Frontleuchte zu einer Baueinheit verbundenen Dynamo zusammengefügt werden, in drei Stufen schematisiert dargestellt. Dabei gelangen zwei zangenförmig ausgebildete rastbare Kupplungsmittel 12.1' und 12.2' der ersten Haltevorrichtung 1' mit wulstartigen Kupplungsmitteln 12.3' und 12.4' der zweiten Haltevorrichtung 4' in Wirkungseingriff. Das rastbare Kupplungsmittel 12.2' wird durch die Wirkung eines als Schraubenfeder 21 ausgebildeten Federelements in seiner vorgesehenen Position gehalten. Wird bei Montage der Beleuchtungseinrichtung des Fahrrades das wulstförmige Kupplungsmittel 12.4' der Haltevorrichtung 4' mit dem federbelasteten, hakenartigen Kupplungsmittel 12.2' der Haltevorrichtung 1' in Wirkungseingriff gebracht, so kann das Kupplungsmittel 12.2' durch Neigen und gleichzeitigem Absenken der Haltevorrichtung 1' aus seiner Ruheposition ausgelenkt werden (Figur 12b).

Bei weiterem Absenken der Haltevorrichtung 1' hintergreift das hakenförmige Kupplungsmittel 12.1' der Haltevorrichtung 1' das entsprechende rastbare Kupplungsmittel 12.3' der anderen Haltevorrichtung 4'und das Kupplungsmittel 12.2' wird unter Einfluß der Feder 21 in seine Ausgangsposition zurückgeführt (Figur 12c). Dabei erfolgt eine elektrische Verbindung der Kontakte 19 und 20, welche die Verbindung des Phasenanschlusses des Dynamos mit dem Rücklicht-Kabel ermöglicht.

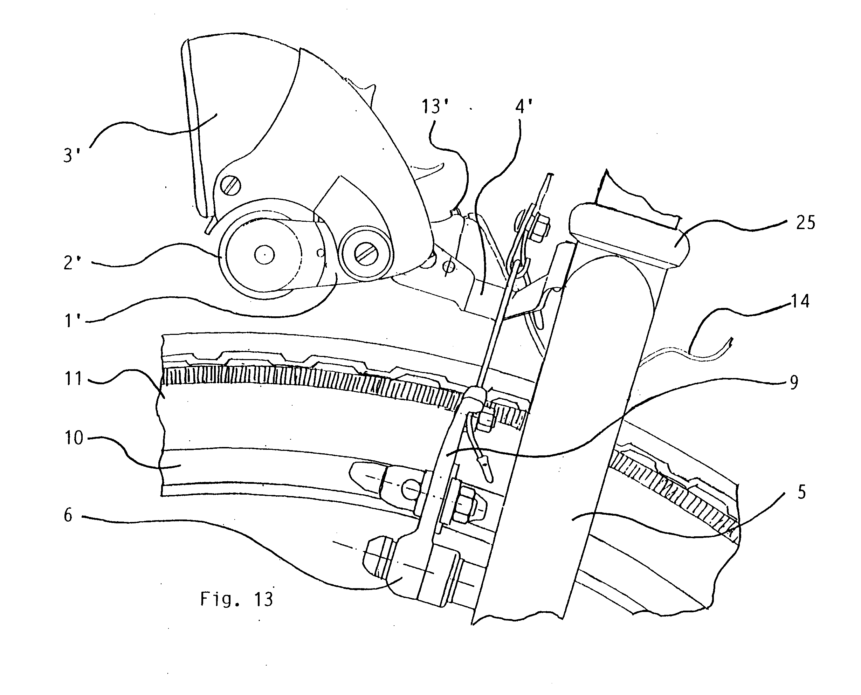

Die in Figur 13 gezeigte Weiterbildung der Erfindung, bei welcher die erfindungsgemäß aus den Haltevorrichtungen 1' und 4' zusammengesetzte Halterung direkt unterhalb des Steuerlagers 26 der Vordergabel 5 befestigt ist. Diese Lösung ist für Fahrräder vorgesehen, die mit einem Cantilever-Bremssystem 9 ausgerüstet sind.

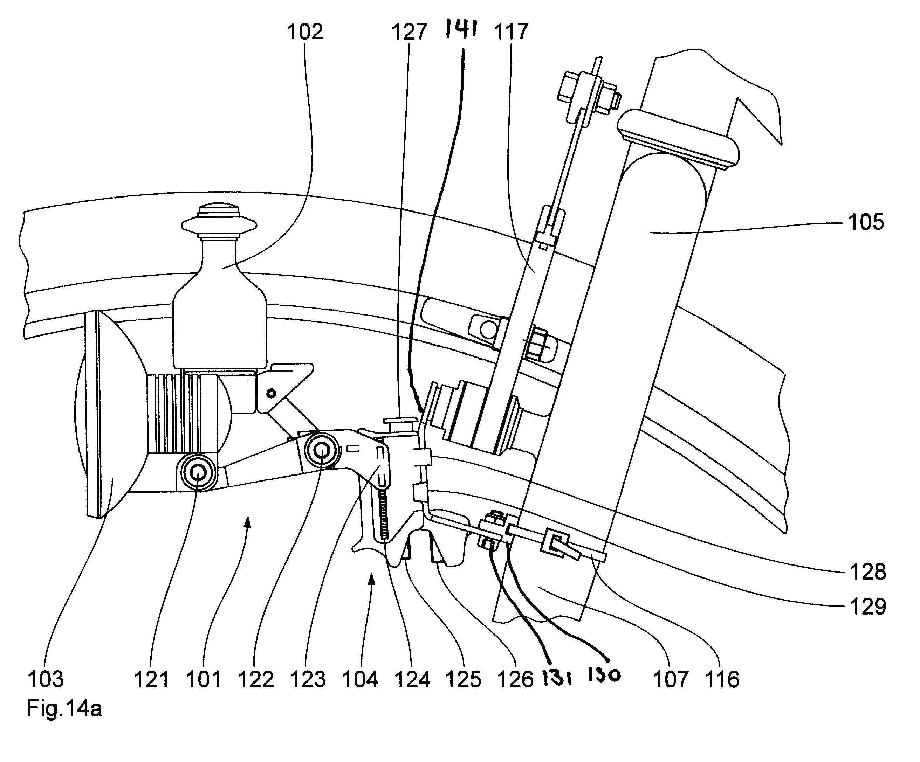

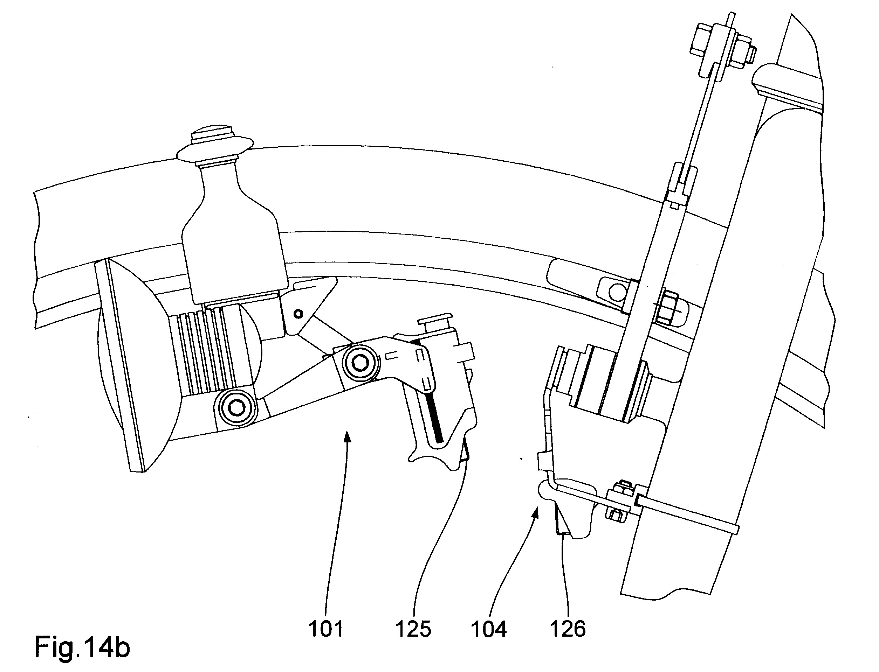

In den Figuren 14a und b ist ein weiteres Ausführungsbeispiel der Erfindung wiedergegeben, bei dem der die Lampe und den Dynamo tragende Teil der Halterung mittels eines entfernbaren Schlüssels vor Entnahme geschützt ist. Die Bezugszeichen bezeichnen Elemente, die im Prinzip den zuvor beschriebenen entsprechen, wobei bei den Figuren 14 bis 16b den jeweils entsprechenden Elementen die Bezifferung um 100 erhöht wurde.

Der die Lampe 103 und den Dynamo 102 tragende Teil 101 der Halterung ist in der Darstellung gemäß Figur 14a in seiner stationären Stellung am Rad (verbunden mit dem Teil 101 dargestellt, während er in der Figur 14b aus der entsprechenden Halterung gelöst dargestellt ist.

Bei der dargestellten Ausführung ist die untere Verbindung des zweiten Teils der Halterung mit einem Kabelbinder 116 mit der Gabel 107 verbunden. Auf diese Weise ist eine erleichterte Montage möglich.

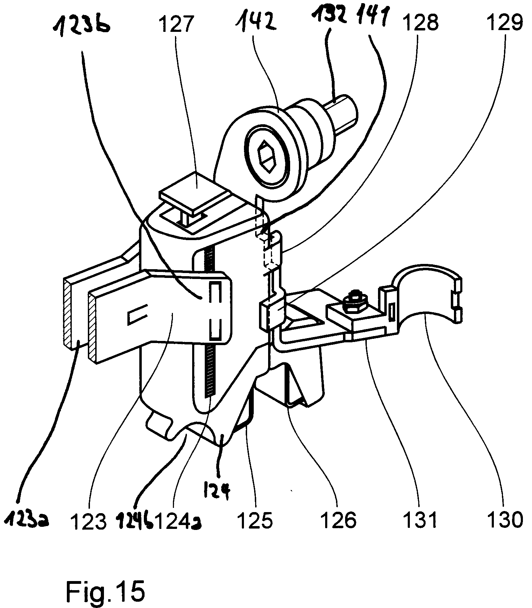

Die Einstellung der Leuchtweite der Lampe 103 erfolgt durch ein Verschwenken um den Schraubbolzen 121, welcher nach dem Festziehen die gewählte Winkelstellung arretiert. Über einen zweiten Schraubbolzen 122 läßt sich zusätzlich die Winkelstellung von Dynamo 102 und Lampe 103 gemeinsam einstellen. Neben einem Schwenken um die Bolzenachse ist bei gelöstem Schraubbolzem 122 auch ein Höhenverstellung möglich. Wie nämlich aus Figur 15 ersichtlich ist, greifen zwei Klammerhälften 123 und 123a mit entsprechenden Ausklinkungen 123b in entsprechende, einander gegenüberliegende Rastnuten 124a eines Kunststoffkörpers 124 ein, der an seiner Unterseite mit einer Griffmulde 124b versehen ist. Durch Festziehen des Schraubbolzens 122 erfolgt damit gleichzeitig die Höhenarretierung.

In den Figuren 14a und 14b ist weiterhin erkennbar, daß der Kunststoffkörper 124 beiseitig Haken 128 aufweist, mit denen er das Trägerelement in der verrasteten Position umklammert. Die Freigabe erfolgt dann durch Hochschieben des Kunststoffkörpers des entfernbaren Teils der Halterung 101 in eine Positon, in der die Haken 128 in die Nachbarschaft einer (in Figur 15 gestrichelt dargestellten) Aussparung 142 des Trägerelements 141 gelangen. Die seitliche Führung des Trägerelements 141 wird durch um 90° abgebogene Winkel 129 unterstützt.

In Figur 15 ist in der von der Gabel des Fahrrads abgenommenen perspektivischen Darstellung ebenfalls einerseits der Bolzen zur Befestigung am Cantilever und andererseits eine Halbschelle 130 und eine Verbindungsschraube/mutter 131, welche zur Aufnahme des Kabelbinders 116 dient. Weiterhin dargestellt ist ein Bolzen 132, welcher die Befestigung des Trägers 141 zum Cantilever-Sockel hin bildet. Mit diesem Bolzen wird gegebenenfalls auch gleichzeitig der an der betreffenden Seite befindliche Bremshebel befestigt.

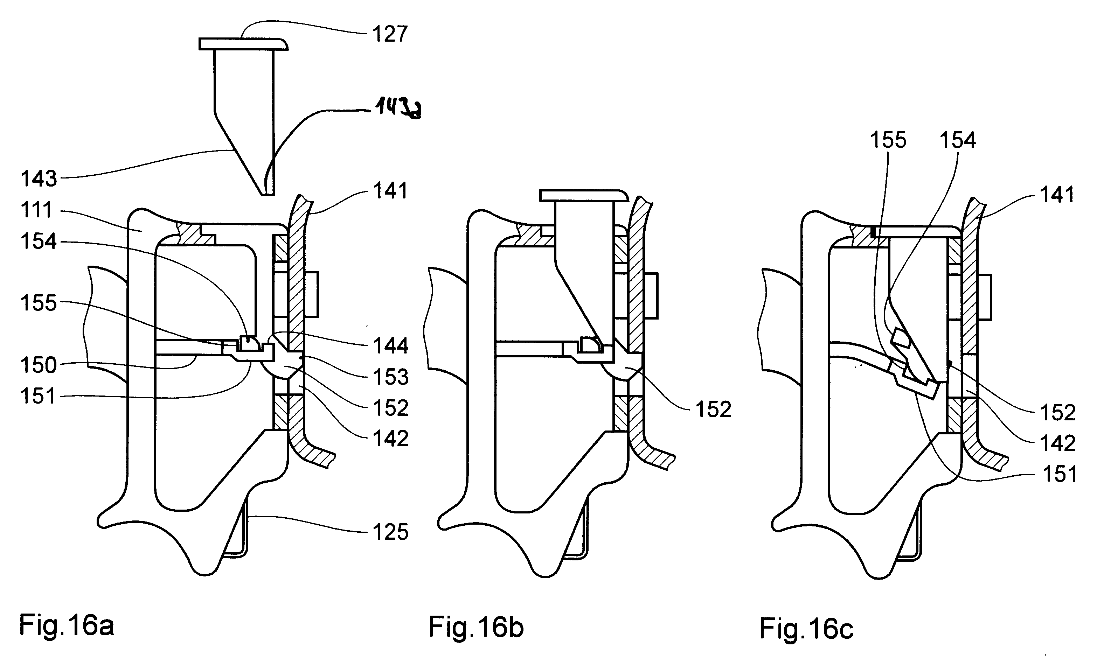

In den Figuren 16a bis 16c sind die Sicherungsmittel dargestellt, welche ein Lösen des Formkörpers 124 des mit Lampe und Dynamo verbundenen Teils der Haltervorrichtung von dem mit dem Fahrrad verbundenen Teil, d.h. ein Lösen vom Trägerelement 141 verhindern.

Hierzu ist der Formkörper 124 intern mit einem flexiblen Hebelarm 150 versehen, welcher an seinem Endbereidch 151 in Richtung auf seinen Fußpunkt mit in einer Aussparung 155 gelegenen einem Anschlag 155 in Bezug auf eine zu diesem Fußpunkt hin gerichtete Bewegung versehen ist. Des weiteren ist noch eine Anschlagfläche 144 vorgesehen, welche zur Einleitung von quer zur Richtung des Hebelarms gerichteten Kräften zwecks Auslenkung des Hebels zur Freigabe des Anschlags 155 bestimmt ist.

Mit dem Anschlag 155 in Eingriff befindet sich eine seitlich an einem weiteren flexiblen Hebelarm 152 angelenkte Nase 153, welche mit einer Aussparung 142 des Trägerelements 141 in Eingriff ist, wenn der flexible Hebelarm 152 in seiner Ruhestellung ist.

Aus Figur 16a ist ferner ein Schlüsselelment 127 ersichtlich, welcher mit einer abgeschrägten seitlichen Fläche 143 und eine schmale Stirnfläche 143a tragenden "Bartteil" versehen ist und mit diesem "Bart" in einen entsprechenden Freiraum im Inneren des Formkörpers 124 einführbar ist. Dies ist in Figur 16b wiedergegeben. Dort befindet sich der Schlüssel 127 in einer Position unmittelbar vor dem Auslösen der Freigabe des abtrennbaren Teils der Haltemittel. Die schmale Stirnfläche 143a liegt bereits auf der Anschlagfläche 144 des Hebels 150 auf.

In Figur 16a ist dann dargestellt, wie der Schlüssel durch weiteres Eindrücken einerseits den Hebel 150 durch Druck auf die Anschlagfläche 144 nach unten auslenkt, so die Anschlagfläche 155 die Nase 154 des weiteren flexiblen Hebels 152 freigibt.

Mit der weiteren Bewegung des Schlüssels 127 in den Formkörper 124 hinein wird der Hebel mit der Anschlagfläche 155 noch weiter ausgelenkt und die abgeschrägte Fläche des Schlüssels gelangt in Kontakt mit der Nase 154 und wird durch den in vertikaler Richtung geführten Schlüssel 127 derart ausgelenkt, daß die weitere Nase 152 des Hebels aus der Aussparung 142des Trägerelements 141 hinausgelangt, so daß das Formteil 124 in seiner Bewegung nicht mehr gesperrt ist und nach oben abgezogen werden kann, so daß der entfernbare Teil der Haltemittel einschließlich Lampe und Dynamo (und mit ihnen auch der Schlüssel 127) entnommen werden kann. Am Fahrrad bleibt damit kein diebstahlgefährdetes Element zurück.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Insbesondere ist die dargestellte Diebstahlssicherung mittels Schlüsselelements auch zur Sicherung anderer Zubehörelemente an einem Fahrrad entsprechend verwendbar.

## Patentansprüche

1. Elektrische Beleuchtungseinrichtung für ein Fahrrad, bei der eine Frontleuchte und der Dynamo an einer gemeinsamen Halterung montiert sind,
**dadurch gekennzeichnet,**
daß die Lampe und der Dynamo in Bezug auf die Halterung getrennt höhenverstellund/oder um eine horizontale Achse verschwenk- und arretierbar ausgebildet ist,
daß die Halterung besteht aus:
einer ersten, mindestens erste rastbare Kupplungsmittel (12.1, 12.1', 12.2 und 12.2') aufweisenden, gemeinsam die Frontleuchte (3, 3') und den Dynamo (2, 2') tragenden (Teil-)Haltevorrichtung (1, 1') und
einer zweiten, an der vordergabel (5) des Fahrrades vorgesehenen und ein Gegenstück für die ersten rastbaren Kupplungsmittel bildenden zweite rastbare Kupplungsmittel (12.3, 12.3', 12.4 und 12.4') aufweisenden (Teil-)Haltevorrichtung (4, 4', 4'') besteht, wobei
die ersten und zweiten rastbaren Kupplungsmittel (12.1, 12.2, 12.3, 12.4 bzw. 12.1', 12.2', 12.3', 12.4') mittels eines Betätigungselements von einander lösbar sind, welches zu seiner Auslösung eine Druckbetätigung oder eine Dreh- oder Schwenkbewegung von weniger als einer Umdrehung erfordert und
daß bei Montage bzw. Demontage der Frontleuchte (3, 3') und des Dynamos (2, 2') ihre arretierte Voreinstellung in Bezug auf die erste (Teil-)Haltevorrichtung beibehalten.

2. Beleuchtungseinrichtung nach Anspruch 1, **da****durch gekennzeichnet,** daß die rastbaren Kupplungsmittel (12.1, 12.2, 12.3, 12.4 bzw. 12.1 ', 12.2', 12.3 ', 12.' ) zur positionsgenauen Arretierung der ersten Haltevorrichtung (1, 1') in bezug auf die zweite Haltevorrichtung (4, 4') Anschlagflächen oder mindestens eine Führung aufweisen, welche bei gegenseitiger flächiger Berührung und gegenseitigem Eingriff der ersten und zweiten Haltevorrichtung die Leuchte (3, 3') und den Dynamos (2, 2') in ausgerichteter Positionierung halten.

3. Beleuchtungseinrichtung nach einem der vorangehenden Ansprüche, **dadurch gekennzeichnet**, daß die Haltevorrichtungen (1, 1', 4, 4', 4'') Kontaktmittel (19, 20) aufweisen, durch welche bei Wirkungseingriff der Rastmittel (12.1, 12.2; 12.3, 12.4, 12.1', 12.2', 12.3', 12.4') der ersten und zweiten Haltevorrichtung eine Verbindung eines an der zweiten Haltevorrichtung vorgesehenen galvanischen Kontaktbereiches (13, 13') zum Anschluß des Fahrrad-Rücklichtes mit dem Dynamo (2, 2') herstellbar ist, wobei die Kontaktbereiche insbesondere derart angeordnet sind, daß die elektrische Kontaktierung beim Verbinden der rastbaren Kupplungsmittel zwangsläufig erfolgt.

4. Beleuchtungseinrichtung nach einem der vorangehenden Ansprüche, **dadurch gekennzeichnet,** daß die zweite Haltevorrichtung (4) zwei Befestigungslaschen (4.1, 4.2) aufweist, von denen eine mit einem der Drehpunkte des Vorderradbremse (9) verbunden ist und die andere sich an einem Holm (7) der Vordergabel (5) des Rades abstützt.

5. Beleuchtungseinrichtung nach Anspruch 4, **dadurch gekennzeichnet,** daß als Verbindungspunkt der Befestigungslasche (4.1) der Cantilever-Sockel (6) am Holm (7) der Vordergabel (5) vorgesehen ist.

6. Beleuchtungseinrichtung nach Anspruch 4, **dadurch gekennzeichnet,** daß die sich an dem Holm (7) abstützende Befestigungslasche (4.2) durch eine Schelle (8) gesichert ist.

7. Beleuchtungseinrichtung nach Anspruch 1, **dadurch gekennzeichnet,** daß die erste und die zweite Haltevorrichtung (1, 1', 4, 4') als Elemente einer Steckverbindung ausgebildet sind.

8. Beleuchtungseinrichtung nach einem der vorangehenden Ansprüche, **dadurch gekennzeichnet**, daß ein Batterie-Pack mit dem Rücklicht verbunden ist, welches durch entsprechende rastbare Kupplungsmittel mit dem Fahrrad im Bereich des Hinterrades verbindbar ist.

9. Beleuchtungseinrichtung nach Anspruch 8, **dadurch gekennzeichnet,** daß die rastbaren Kupplungsmittel des Fahrradrücklichtes und die der die Kombination aus Frontleuchte (3, 3') und Dynamo (2, 2') tragenden Haltevorrichtung (1, 1') zueinander komplementär ausgestaltet sind, so daß Front- und Heckbauteil zwecks gemeinsamer Aufbewahrung miteinander verbunden werden können.

10. Beleuchtungseinrichtung nach einem der vorangehenden Ansprüche, **dadurch gekennzeichnet,** daß der Dynamo als Walzendynamo (2') ausgebildet ist und über die Lauffläche der Fahrradbereifung (11) angetrieben wird.

11. Beleuchtungseinrichtung nach einem der vorangehenden Ansprüche, **dadurch gekennzeichnet,** daß die erste Haltevorrichtung (1, 1') aus Kunststoff, vorzugsweise Delrin, besteht und die zweite Haltevorrichtung (4, 4') als Blechformteil ausgebildet ist.

12. Beleuchtungseinrichtung insbsondere nach einem der vorangehenden Ansprüche, **dadurch gekenn****zeichnet,** daß eine dem Diebstahlschutz dienende Feststelleinrichtung (4.4) oder Schlüsselvorrichtung vorgesehen ist, ohne deren Vorhandensein bzw. Betätigung ein Entfernen der ersten Haltevorrichtung (1, 1') von der zweiten Haltevorrichtung (4, 4', 4'') nicht erfolgen kann.

13. Beleuchtungseinrichtung nach Anspruch 12, **dadurch gekennzeichnet,** daß die Feststelleinrichtung (4.4) eine durch einen Schrauber mit einem Sonderprofil bewegbare Schraube aufweist bzw. die Schlüsselvorrichtung das Betätigungselement bildet.

14. Beleuchtungseinrichtung nach einem der Ansprüche 1 und 2, **dadurch gekennzeichnet,** daß die rastbaren Kupplungsmittel (12.1 bzw. 12.2') durch eigene Elastizität oder durch Wirkung eines Federelements ihre Haltefunktion erfüllen, welche insbesondere durch die Schlüsselvorrichtung aufhebar ist.

15. Beleuchtungseinrichtung nach Anspruch 14, **dadurch gekennzeichnet,** daß die rastbaren Kupplungsmittel aus einer an einem beweglichen Hebelelement angeordneten Rastnase bestehen, die mit einer der Haltevorrichtungen verbunden ist und bei unbetätigtem Schlüsselelement durch Eingriff in die andere Haltevorrichtung deren relative Verschiebebewegung sperrt.

16. Beleuchtungseinrichtung nach Anspruch 15, **dadurch gekennzeichnet,** daß das erste bewegliche Hebelelement durch ein zweites bewegliches Hebelelement in seiner Bewegung blockiert ist, wobei das Schlüsselelement bei seiner Betätigung das zweite Hebelelement zur Freigabe des ersten Hebelelements aktiviert.
